# EUROPEAN PATENT APPLICATION

(11) **EP 1 347 623 A1**
(43) Date of publication of application: **24.09.2003**
(21) Application number: 02006461.4
(22) Date of filing: 22.03.2002
(51) Int. Cl.: H04M 1/725

(54) **Downloading of application software for an accessory device to a mobile terminal**

(71) Applicant: Nokia Corporation, 02150 Espoo (FI)
(72) Inventor: Kangas, Petri Juhani, 90800 Oulu (FI); Kinnula, Atte Eerikki, 90440 Kempele (FI)
(74) Representative: Schippan, Ralph, Dr.-Ing.

(57) **Abstract**

The invention relates to a method for supporting in a mobile terminal 10,30 the operation of an accessory device 20,40 connected to this mobile terminal 10,30. In order to enable particularly flexible connections between a mobile terminal and accessory devices, it is proposed that the method comprises downloading application software 23,43 for the accessory device 20,40 to the mobile terminal 10,30 and running downloaded application software 15,35 for the accessory device 20,40 in the mobile terminal 10,30. It is ensured that a data exchange required for the operation of the accessory device 20,40 is enabled as transparent bi-directional bit-stream between the downloaded application software 15,35 and the accessory device 20,40. The invention relates equally to a corresponding mobile terminal, to a corresponding communication system and to a corresponding software for such a mobile terminal.

## Description

### FIELD OF THE INVENTION

The invention relates to a method for supporting in a mobile terminal the communication with an accessory device connected to the mobile terminal. The invention relates equally to such a mobile terminal, to a communication system comprising such a mobile terminal and an accessory device and to a software for such a terminal.

### BACKGROUND OF THE INVENTION

It is known from the state of the art to provide a possibility of connecting specific accessory devices to a mobile terminal, e.g. a mobile phone, in order to add new features to the mobile terminal.

There are several alternative technologies to physically connect accessory devices to mobile terminals, for instance standardized buses, such as infrared, RS232, Bluetooth and USB (universal serial bus), as well as many kinds of proprietary buses. There may also exist more than one standardized or proprietary protocol that might be used with any of these hardware buses. The physical infrared bus, for example, can be operated with one of several standardized protocols, such as IrDa, IROBEX and IRComm, or with some proprietary protocol.

In addition to the physical connection, also a software support of the specific accessory device has to be provided in the mobile terminal to which it is connected. Such a software support has to enable a required exchange of data between the accessory device and the mobile terminal and to perform functions in the mobile terminal required for operating the accessory device.

In the past, mobile phones supported only a few simple accessory devices, and the support was hard-coded in the software of the mobile phone. Such accessory devices are headsets for hands-free audio, PC (personal computer) data cables for standardized data calls and generic printers for printing business cards over infrared. Adding a hard-coded support for arbitrary new accessories, however, is not realistic in this fashion.

Still, there is a great variety of possible accessory devices that could be connected to mobile phones, for instance digital cameras, heart rate monitors, etc. It would thus be of advantage, if mobile phones comprised an application platform supported by all mobile phone vendors for the software required for different accessory devices.

An example of a standardized application platform is MIDP (mobile information device profile for Java 2 MicroEdition standard) Java. Application programming interfaces (API) are evolving for these platforms and there will be dedicated APIs for each connectivity technology, i.e. for infrared, USB, Bluetooth, RS232, etc. As a result, Java applications developed for mobile phones can access accessory devices connected to the mobile phone either by a wired connection such as RS232/USB or by a wireless connection such as infrared or Bluetooth via the different APIs.

However it will take time to introduce all relevant APIs, i.e. especially USB, Bluetooth, infrared and RS232, into MIDP Java, in particular since a dedicated API has to be developed for each connection medium. The first version of the MIDP Java stardard does not even support any specific accessory connectivity API yet. Moreover, some accessory devices such as digital cameras have their own manufacturer dependent protocols for the physical connection. With an extended MIDP standardization, camera manufacturers might be able to enable mobile phone Java applications to communicate with their cameras using their specific camera protocols over USB or RS232, for example in order to view and send images. Such proprietary protocols will require even more time for developing all necessary APIs.

Preceding the developments, it will moreover take much time to reach agreements between the mobile terminal providers and the accessory device vendors for each accessory device with regard to the required and desired functionality of the provided API.

It is also a disadvantage of this approach that the functions required for each accessory device that is to be supported by the APIs have to be determined beforehand. Thus, the API has to be updated for each connectivity technique whenever further accessory devices are to be supported or whenever a new version of an already supported accessory device is to be introduced.

It is further a disadvantage of this approach that it lacks developer-friendliness. Dedicated Java APIs, in particular for USB and Bluetooth, can turn out to be rather complicated. This might even discourage device manufacturers from providing an accessory device with a Java application in the first place.

Finally, this approach does not allow a comfortable use of an accessory device for a mobile terminal. The user has to download the Java application for the respective accessory device from somewhere over the www (word wide web) or wap (wireless application protocol). The user moreover has to start the application by hand after having connected the accessory device to the phone, since there is no centralized way of detecting what accessory device is currently connected to the mobile phone.

### SUMMARY OF THE INVENTION

It is an object of the invention to enable a flexible connection of accessory devices to a mobile terminal. It is equally an object of the invention to enable a developer-friendly connection of accessory devices to a mobile terminal.

These objects are reached according to the invention with a method for supporting in a mobile terminal a communication with an accessory device connected to the mobile terminal, which method comprises as a first step downloading application software for the accessory device to the mobile terminal. In a second step, the downloaded application software for the accessory device is run in the mobile terminal. For this second step, a data exchange required for the communication with the accessory device is enabled as transparent bi-directional bit-stream between the downloaded application software running in the mobile terminal and the accessory device.

The objects of the invention are equally reached with a mobile terminal comprising means for realizing the steps of the proposed method for supporting a communication with an accessory device connected to said mobile terminal.

The objects of the invention are further reached with a communication system comprising the proposed mobile terminal and an accessory device that can be connected to such a mobile terminal and that supports a communication with application software downloaded to this mobile terminal.

Finally, the objects of the invention are reached with a software enabling a mobile terminal to communicate with an accessory device connected to the mobile terminal. The proposed software comprises program code realizing the steps of the proposed method when run in processing means of a mobile terminal to which an accessory device supporting these steps is connected.

It is to be noted that the term accessory device is meant to comprise a fixed, installed part for a mobile terminal as well as a separate, independent stand-alone device that can be connected to the terminal by wire or by a wireless link. The accessory device may further be designed to operate only in connection with a mobile terminal, but it may also be designed as a full-fledged stand-alone device. It is only required that the device possesses its own processing and/or data gathering capabilities and that is able to communicate with a mobile terminal. The accessory device could e.g. also be a second mobile terminal. In case the accessory device comprises an implemented application, the communication can take place between the application in the mobile terminal and the application in the device, but the device may also constitute a simple data source and/or data sink which can be accessed by the mobile terminal.

The invention proceeds from the consideration that the most flexible connectivity can be achieved in case the application required for communicating with an accessory device is downloaded for the respective accessory device, and not implemented beforehand in the mobile terminal. The invention further proceeds from the consideration that a transparent bi-directional data exchange between a downloaded application and an accessory device prevents the necessity of developing a dedicated API for each accessory device and for each physical connection media.

It is thus an advantage of the invention that it is neither necessary to program dedicated APIs for each physical connection technology, nor to take account of all functions required by different accessory devices, since an employed accessory API only has to allow a transparent transmission of binary data.

It is further an advantage of the invention that it is not necessary to determine beforehand, which kinds of accessory devices might be connected to a mobile terminal, since the respectively required information and software is contained in the application software downloaded for the respective accessory device.

Thus, the mobile terminals can be designed in a general way and are still suited for all kinds of accessory devices.

The invention therefore provides a maximum flexibility, while the development and software implementation of the only required accessory API is rather simple, does not require significant efforts and costs, and can be employed in any kind and model of a mobile terminal. Moreover, a continuous maintenance or version updates are not required.

Preferred embodiments of the invention become apparent from the dependent claims.

In a preferred embodiment of the invention, the proposed mobile terminal comprises an accessory application programming interface enabling a transparent bi-directional data exchange between a downloaded application software running in the mobile terminal and an accessory device connected to the mobile terminal. The accessory API can be in particular a generic accessory API enabling exclusively such a transparent bi-directional data exchange. It can thus be a minimal API which contains only the opening of the transparent bitstream and indications of opening/closing the connection as an accessory device is connected/disconnected. The mobile terminal further comprises an accessory protocol defining a transparent bi-directional bit-stream for a data exchange of application data between a downloaded application software and a connected accessory device. Finally, the mobile terminal of the preferred embodiment comprises an accessory manager for managing a transparent bi-directional bit-stream for a data exchange of application data between a downloaded application software running in the mobile terminal and an accessory device connected to the mobile terminal via the accessory application programming interface and according to the provided protocol. The objects of the invention are also reached with such an accessory manager.

The accessory protocol, the accessory API and the accessory manager of such a mobile terminal constitute together a smart accessory connectivity framework. The proposed accessory protocol will be referred to in the following also as smart accessory protocol, the proposed accessory API as smart accessory API, and the proposed accessory manager as smart accessory manager.

In an advantageous embodiment of the invention, the mobile terminal detects automatically, whether an accessory device with which it can communicate according to the invention is connected to the mobile terminal, e.g. based on a message transmitted by a smart accessory device upon connection to a mobile terminal. This task might be performed by a smart accessory manager of the mobile terminal.

In a further preferred embodiment of the invention, the application software is also downloaded automatically by the mobile terminal, which download can be managed again by a smart accessory manager of the mobile terminal. Such an automatic download enables a particularly comfortable use of an accessory device, since the user does not have to download the application software actively from some place. The application software can be downloaded in particular from the accessory device itself or from a website indicated by the accessory device.

The application software downloaded for smart accessory devices is preferably allocated dynamically in a memory of the mobile terminal. When the smart accessory device is disconnected, the application software can then either persist in this memory or expire after a while. In case the downloaded application software persists in the memory, the mobile terminal should determine before a download of application software for an accessory device connected later on, whether the required application software is already available in the mobile terminal, and download the application software only if the application software is not yet available. This check can be performed in particular by a smart accessory API and a smart accessory manager of a mobile terminal. It is also possible, that the terminal is able to replace stored application software with application software for a newly connected smart accessory device, if the memory resources of the mobile terminal are exhausted. Such a procedure should be transparent to the user. The procedure could resemble well-known caching systems, in which accessory applications persist in a memory block of the mobile terminal of predetermined size. When new accessories are connected and old ones detached, the memory block fills up with application software. The mobile terminal can then remove the oldest ore the least used applications from the memory of the terminal to give space for new applications.

In case the downloaded application software is removed automatically or by the user from the memory of the terminal, the software has to be downloaded again for a subsequent connection of the device to the terminal. There could be provided a registry in the terminal, though, that a specific application software has previously been downloaded to the terminal from a specific kind of device. Such a registry could be managed in particular by an accessory manager of the terminal.

The mobile terminal, and in particular the accessory manager of the mobile terminal, may also detect automatically a removal of an accessory device from the mobile terminal. A detection of the removal of a connected device may be the precondition for allowing or initiating a removal of application software stored for this device.

In case the downloaded application software is used by a mobile terminal for operating the accessory device, the application software could also be downloaded from the accessory device to the terminal only for the time that the accessory device is run from the terminal. The application resides in this case e.g. in the memory of the accessory device and the accessory manager makes it visible to the user of the terminal as if it were installed in the terminal, similarly as terminal-resident Java applications. When the user runs the application, it will then be loaded into the terminal for execution, and be removed again after the usage session ends. Consequently, the permanent memory of the terminal will not fill up with downloaded accessory applications, since they only occupy memory while they are running.

In a further preferred embodiment of the invention, a mobile terminal, and in particular a smart accessory API of a mobile terminal, is able to update or replace stored application software which was downloaded for smart accessory devices with newer versions obtained e.g. from a network service or from an updated smart accessory device. In order to enable such an update or replacement, the smart accessory API should be able to compare the version of an offered application software for a smart accessory device with the version of a stored application software for the same smart accessory device.

In an equally preferred embodiment of the invention, a smart accessory device is allowed to contain downloadable software for several applications, e.g. multiple applets for several games with a joystick cover. In this case, a smart accessory manager of the mobile terminal advantageously comprises means for inquiring from the smart accessory device how many applications there are and for verifying whether the respective software is already stored in the memory of the mobile terminal due to an earlier connection. In case of multiple new applications, the smart accessory manager then downloads the software for all new applications subsequently into the mobile terminal.

Further, in the case of compatible accessory devices with which a mobile terminal can communicate with the same or similar application software, there may be downloaded application software from different vendors in a mobile terminal which can be used for communicating with each of the compatible accessory devices. It is equally possible, that the application software for the device of a first vendor was previously downloaded into the terminal, while a second vendor selling a compatible device now offers an update version for its device. In this case, the stored application software could be updated into another application version with software loaded from the second vendor.

The smart accessory protocol of the mobile terminal according to the invention is preferably a simple smart accessory protocol implemented as a software driver enhancement for the chosen hardware interface. For instance, the interface of a smart accessory device can support this protocol, or the bottom connector of some mobile terminal models.

The mobile terminal has to support running the kind of application software downloaded from a smart accessory device. The terminal preferably supports Java or Symbian OS so that the application software can be downloaded as platform independent Java applet or Symbian application. To this end, the mobile terminal might comprise a Java VM (virtual machine), e.g. a kJava VM or a MIDP Java VM, or a Symbian OS (operating system). A kJava VM constitutes a reduced version of the standard Java virtual machine. A Symbian OS API exists already as software component for mobile terminals, and a kJava API is under development. In case the downloadable code is employed within the framework of Symbian OS or kJava, security is an inherent feature of the proposed method.

A connection between an enhanced connection media driver in the terminal and kJava API or Symbian OS API has to be implemented so that these APIs support code download through the smart accessory protocol. A support for raw bitstream transfer from these APIs through the enhanced connection media driver is also needed.

In case of kJava or Symbian OS, the smart accessory API has thus to be implemented as part of the kJava or Symbian OS API. This small API requires basically only the following functions: OpenPipe(), SendData(data), callback DataReceived(data) and ClosePipe().

Such a smart accessory API is very similar to a socket communications API supporting TCP/IP (transfer control protocol / internet protocol). It would thus be possible to implement a pipe for a transparent data exchange between the downloaded application software and the smart accessory device using TCP/IP sockets transmitting IP packets. But also an API which is based on a simpler protocol is able to provide the possibility to route IP packets over it.

As mentioned above, the manufacturer of an accessory device might prefer not to store the required application software for download in the accessory device, but to provide instead an indication from where the application software is to be downloaded. It is possible for example that the accessory device provides a tiny applet that uses an URL (universal resource locator) to fetch the actual application software over the air, e.g. from the manufacturers website, and installs it into the mobile terminal. Such an approach is enabled by the current Symbian OS API, and equally without any extra support by the proposed Smart Accessory API. In an alternative approach, the accessory device might provide only an indication of a source from which the application software may be downloaded, e.g. an URL. Such an indication may then be provided to a browser of the terminal. The browser accesses the indicated source and loads the required application software from this source, possibly after certain selections have been carried out by the user.

It is an advantage of the invention that it is not bound to any specific connection media between a mobile terminal and an accessory device. In a preferred embodiment of the invention, the manager of the mobile terminal is therefore able to establish a connection via any connection media supported by the mobile terminal. The smart accessory manager can be able in particular to support any of the most common connection media, like infrared, RS232, Bluetooth and USB.

The invention can be employed for any mobile terminal, e.g. for a mobile phone. The invention can further be employed for any kind of accessory device that is to be connected to a mobile terminal, e.g. for a heart rate monitor, a GPS (global positioning system) receiver, an RFID (radio frequency identity) reader, a fingerprint sensor, a pedometer, a bar code reader, a camera, a joystick, a mouse, etc.

A communication system in which the invention can be employed can also comprise a user interface with a display and a user selection device. The accessory device can then be a cover that can be connected to the user interface, preferably detachably. The application software can be an interface software enabling a communication between the user interface of the mobile terminal and the cover. Beside a program part enabling the communication between the mobile terminal and the cover, the interface software may comprise a program part for displaying selectable functions on said user interface. A further program part of the interface software may be provided for processing signals generated by a selection of functions by a user of the mobile terminal via the user interface.

As mentioned above, the invention can also be employed for enabling a communication between two or more mobile terminals forming a communication system, the second mobile terminals constituting the accessory device of the invention. In case the first mobile terminal can download software which also resides in the second terminal, the software in the first terminal can access and use the second terminal with the same software. This could also be used to set up ad-hoc communication networks, e.g. over Bluetooth™, even when there is no network available.

It is to be noted that it is not required in such a network that one of the terminals is a "master" device and the other(s) are "secondary" devices. The network can also be built such that all participating mobile terminals are "first terminals" from their own particular viewpoint, i.e. all participating terminals can access and use each other with the same software.

Also in general, the invention is not limited to a particular mode of connection between an accessory device and the mobile terminal, i.e. they can either be peers or either of them can assume the role of a master depending on the application or situation.

The invention can therefore be employed for operating an accessory device via a mobile terminal or for operating a mobile terminal via an accessory device, but also as another means for exchanging data between these devices.

The mobile terminal according to the invention may comprise a memory which is provided exclusively for storing downloaded application software for a communication with connected accessory devices.

### BRIEF DESCRIPTION OF THE FIGURES

Other objects and features of the present invention will become apparent from the following description of exemplary embodiments of the invention considered in conjunction with the accompanying drawings.
- Fig. 1a-1g: illustrate a first, general embodiment of the method according to the invention implemented in a mobile phone supporting MIDP Java;
- Fig. 2: illustrates a second, general embodiment of the method according to the invention implemented in a mobile phone supporting Symbian OS;
- Fig. 3a-3c: illustrate the use of the method presented in fig. 1a-1g when the mobile phone is connected to a heart rate monitor as accessory device; and
- Fig. 4a,4b: illustrate the use of the method presented in fig. 1a-1g when the mobile phone is connected to a step counter and fat burn rate calculator as accessory device.

### DETAILED DESCRIPTION OF THE INVENTION

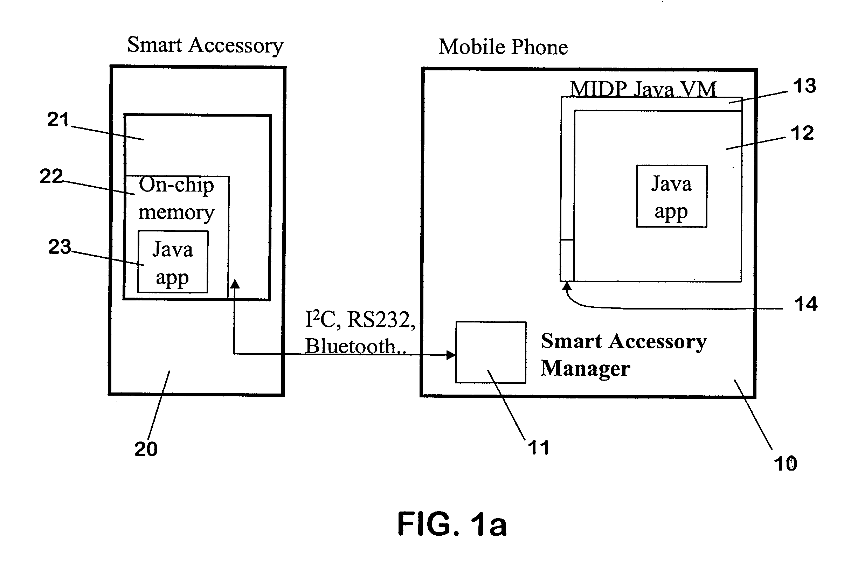

Figure 1a shows a smart accessory device 20 connected to an MIDP compliant mobile phone 10, for which a smart accessory connectivity framework is provided in accordance with a first embodiment of the invention.

The depicted mobile phone 10 comprises a smart accessory manager 11 implemented in the software of the mobile phone 10. The mobile phone 10 further comprises an MIDP Java VM 12 implemented as well in the software of the mobile phone 10. The MIDP Java VM 12 provides a Java API 13 to regular features of the mobile phone 10, e.g. to a user interface or to an internet access functionality, and a minimized smart accessory API 14 as a part of the Java API 13.

The depicted smart accessory device 20 comprises an ASIC or a microcontroller 21 with an on-chip memory 22. In the memory 22, a Java applet 23 is stored. The Java applet 23 comprises the entire application software required for operating the smart accessory device 20 with a mobile terminal.

The smart accessory device 20 is connected to the mobile phone 10 via any connection medium, e.g. a USB, infrared, Bluetooth™ or RS232. The connection medium connects more specifically the ASIC or microcontroller 21 of the smart accessory device 20 with the smart accessory manager 11 of the mobile phone 10.

The interaction between the accessory device 20 and the mobile phone 10 is based on a smart accessory protocol. The protocol defines as a first message transaction an identification of a connected smart accessory device indicating that the connected accessory device complies with the smart accessory protocol. The protocol defines as a second message transaction a query for an installable application software package from a connected smart accessory device. The protocol defines as a third message transaction a downloading of an application software package from a connected smart accessory device.

The protocol finally defines as a fourth message transaction a transmission of binary application data packets to and from a connected smart accessory device.

The smart accessory manager 11 of the mobile phone 10 is capable of managing a communication with a connected smart accessory device 20 using this smart accessory protocol over any possible physical connection media.

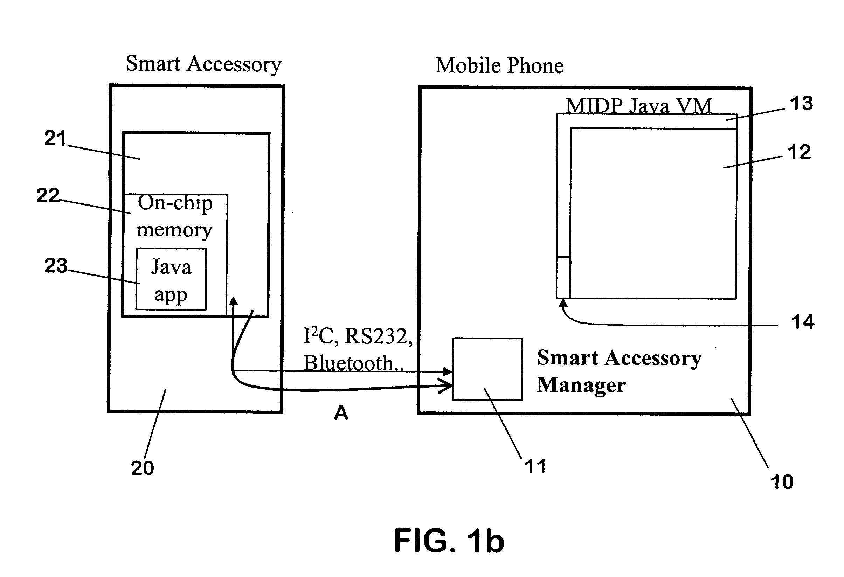

The interactions between the mobile phone 10 and the accessory device 20 are established and maintained as described in the following with reference to figures 1b-1g. Each of figures 1b-1g shows the same mobile phone 10 and the same accessory device 20 connected to this mobile phone 10 as figure 1a. In addition, a different step of a sequence of steps of an embodiment of the method according to the invention is indicated in each figure.

When the accessory device 20 is connected via any of the enabled media to the mobile phone 10, the ASIC or microcontroller 21 of the accessory device 20 transmits an information to the smart accessory manager 11 indicating that the connected accessory device 20 is a smart accessory device capable of handling the defined smart accessory protocol. This transmission is indicated in figure 1b by a line to which the reference sign A is associated. The smart accessory manager 11 is thus able to detect automatically the connection, and similarly the removal, of a smart accessory device 20.

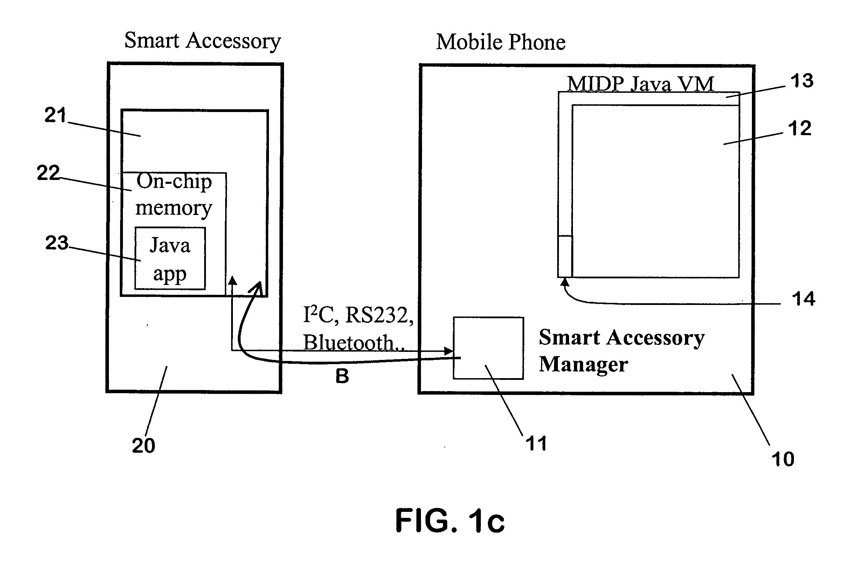

The smart accessory manager 11 then requests a download of application software from the smart accessory device 20 to the mobile phone 10 in an "application download query". This query is indicated in figure 1c by a line to which the reference sign B is associated.

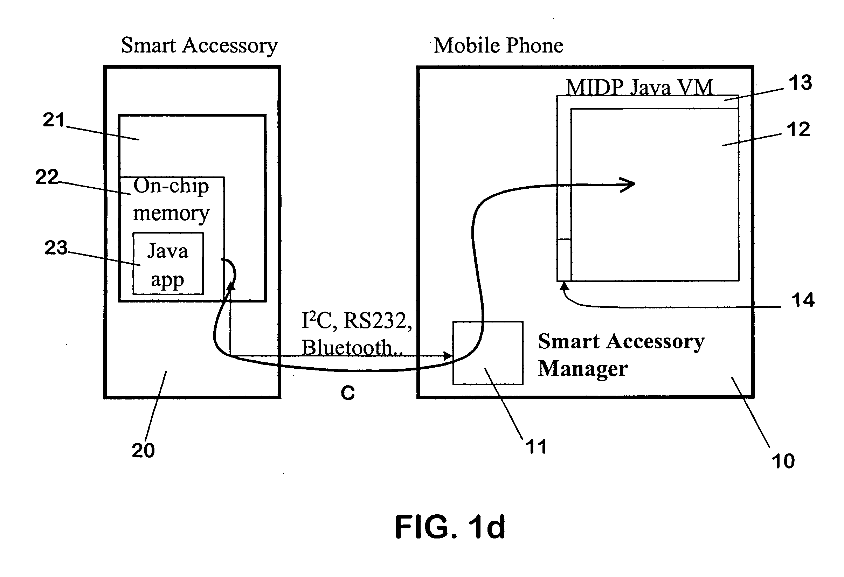

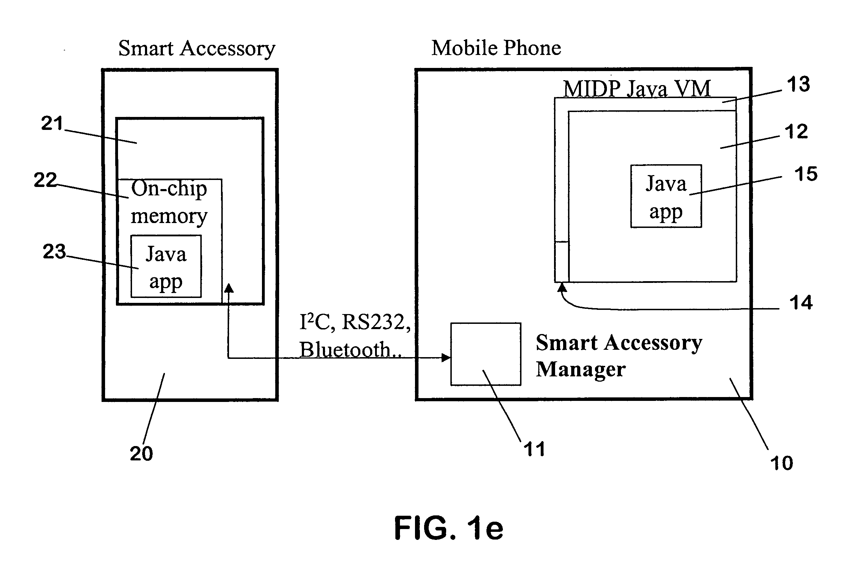

As a result, the Java applet 23 stored in the on-chip memory 22 of the ASIC or microcontroller 21 of the smart accessory device 20 is downloaded via the smart accessory manager 11, stored to the permanent memory of the mobile phone 10 and installed as a new Java application for the MIDP Java VM 12 of the mobile phone 10. The download is indicated in figure 1d by a line to which the reference sign C is associated, and the resulting availability of the Java applet in the MIDP Java VM 12 is indicated in figure 1e by a rectangle to which the reference sign 15 is associated.

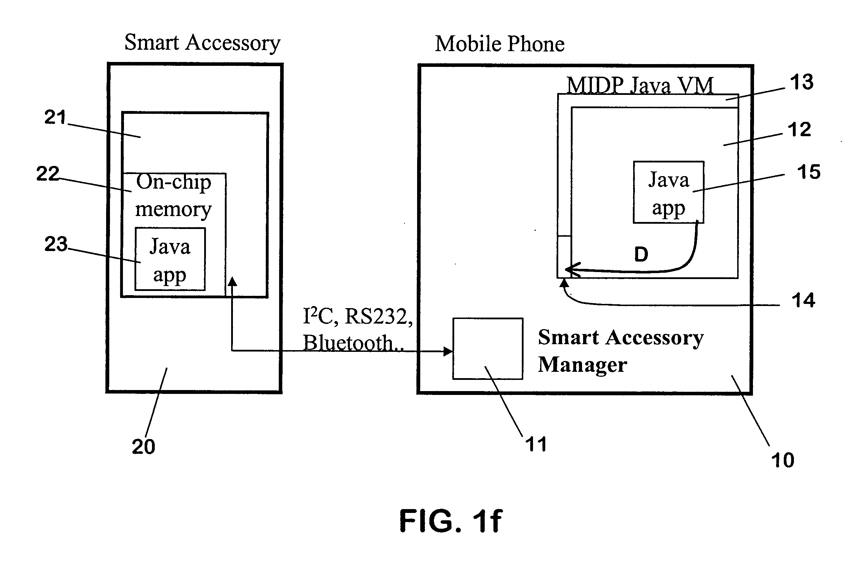

The downloaded Java applet 15, which is then run by the MIDP Java VM 12, opens in a first step a pipe via the smart accessory API 14 provided by the MIDP Java VM 12, as indicated in figure 1f by a line to which the reference sign D is associated.

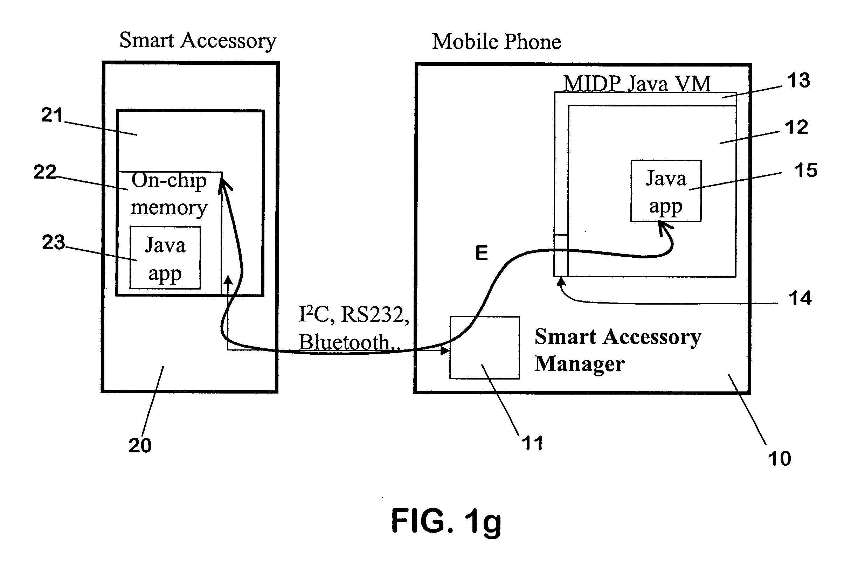

Thereupon, bi-directional byte-streams can be exchanged between the Java applet 15 in the mobile phone 10 and the microcontroller 21 of the smart accessory device 20 via the smart accessory API 14 and the smart accessory manager 11. The byte-streams are used for a transparent application data exchange. The virtual application byte-stream connections between the accessory device 20 and the mobile phone 10 is managed by the smart accessory manager 11. The byte-streams are indicated in figure 1g by a connection line to which the reference sign E is associated.

It is to be noted that in one possible embodiment of the method according to the invention, the same Java applet 23 only has to be downloaded once from a smart accessory device 20 to a mobile phone 10, in case the Java applet 15 is kept stored in the mobile phone 10 also after disruption of the connection between the smart accessory device 20 and the mobile phone 10. The Java applet 15 can then request any time to open a connection to the accessory device 20 from which it was downloaded. The smart accessory manager 11 will known which smart accessory device this was and whether it is currently connected to the mobile phone 10 or not. In case the smart accessory device 20 is connected to the mobile phone 10, the byte-stream connection can be established as described above via the smart accessory API 14 and the smart accessory manager 11.

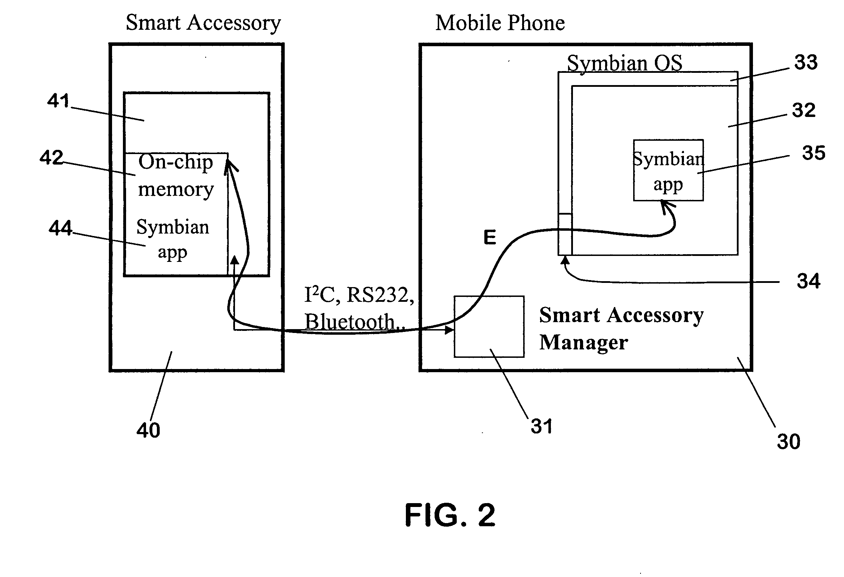

Figure 2 shows another smart accessory device 40 connected to another mobile phone 30, for which a smart accessory connectivity framework is provided. The physical connection is established again via any connection medium, e.g. a USB, infrared, Bluetooth™ or RS232.

While the MIDP compliant mobile phone 10 of figures 1a-1g could be a mass market phone, the mobile phone 30 of figure 2 is a Symbian compliant high-end phone.

The mobile phone 30 of figure 2 comprises a Symbian OS 32 instead of a MIDP Java VM 12. The Symbian OS 32 provides a Symbian API 33 to the regular features of the mobile phone 30 and a minimized smart accessory API 34 as part of the Symbian API 33. Like the mobile phone 10 of figures 1a-1g, the mobile phone 30 of figure 2 further comprises a smart accessory manager 31.

The smart accessory device 40 of figure 2 comprises again an ASIC or a microcontroller 41 with an on-chip memory 42. In contrast to the smart accessory device 20 of figures 1a-1g, however, the on-chip memory 42 of the accessory device 40 of figure 2 stores a Symbian application 43 instead of a Java applet 23.

The steps that are performed for connecting the smart application device 40 to the mobile phone 30 and for operating it via the mobile phone 30 correspond exactly to those described with reference to figures 1a-1g, except that the Symbian application 43 stored in the on-chip memory 42 of the smart accessory device 40 is downloaded via the smart accessory manager 31 into the Symbian OS 32 of the mobile phone 30.

Figure 2 shows the mobile phone 30 in a state in which the Symbian application 35 is already downloaded into the Symbian OS 32, and in which a transparent byte-stream connection E between the downloaded Symbian application 35 and the ASIC or microcontroller 41 of the accessory device 40 is established via the smart accessory API 34 and the smart accessory manager 31. This corresponds in the sequence of steps in the first example to figure 1g.

The availability of the Symbian application in the Symbian OS 32 is indicated in figure 2 by a rectangle to which the reference sign 35 is associated.

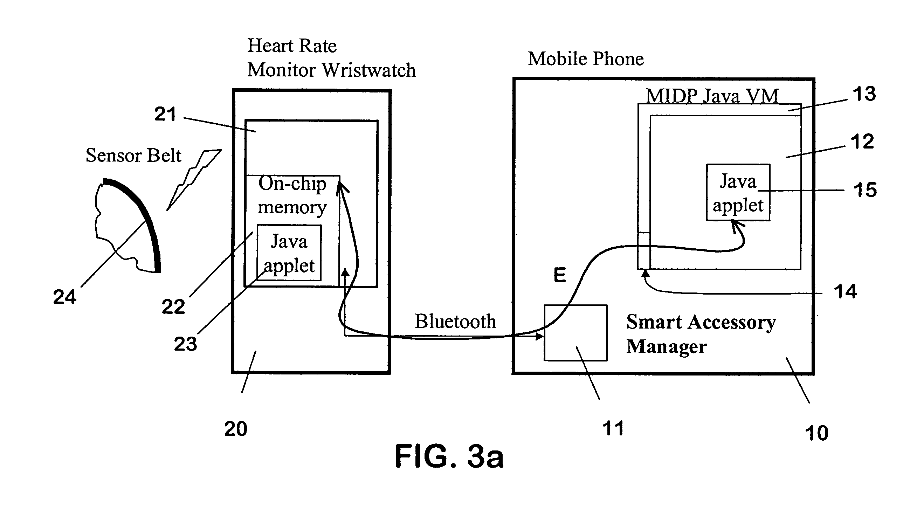

Figures 3a-3c illustrate a specific example for a co-operation between a smart accessory device 20 and a mobile phone 10, to which the accessory device 20 is connected via a Bluetooth™ connection. The accessory device 20 and the mobile phone 10 correspond to those described with reference to figures 1a-1g, and corresponding components are provided with the same reference signs.

In the example of figures 3a-3c, the smart accessory device 20 is a heart rate monitor which comprises an ASIC 21 with an on-chip memory 22. The ASIC 21 further enables an inductive link to a wristwatch with a sensor belt 24.

Figure 3a shows a situation in which the Java applet 23 was downloaded from the on-chip memory 22 to the MIDP Java VM 12 of the mobile phone 10 and in which a transparent byte-stream connection E between the downloaded Java applet 15 and the ASIC 21 of the hear rate monitor 20 is established. The depicted situation thus corresponds to the situation in figure 1g.

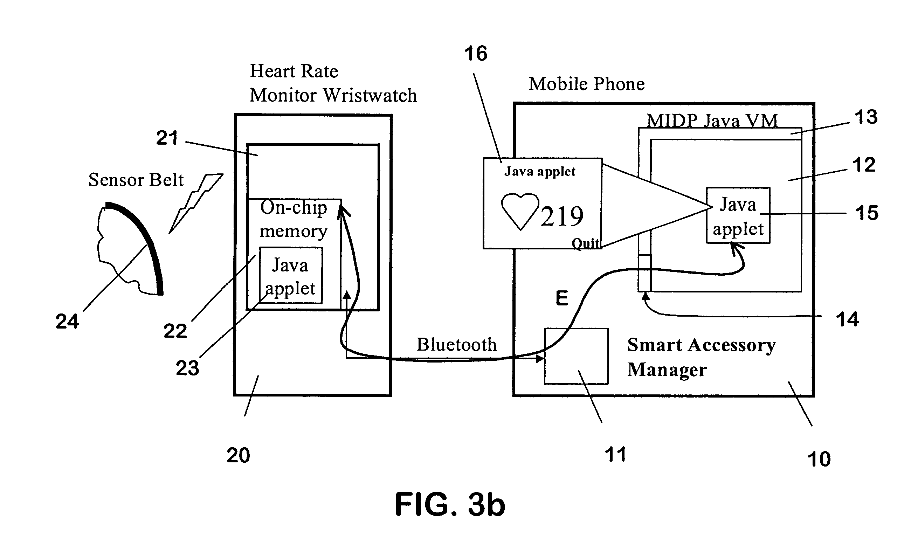

In figure 3b, a resulting effect of the data exchange E is indicated. The ASIC 21 of the heart rate monitor 20 receives signals from the wristwatch belt 24 via the inductive link and determines the current heart rate. This heart rate is forwarded via the established transparent byte-stream connection E to the downloaded Java applet 15 in the mobile phone 10. The downloaded Java applet 15 occasions via the Java API 13 that the currently measured heart rate is indicated on the display of the mobile phone 10. The display offers moreover the option to quit the running program. The concerned part of the display is indicated in figure 3b with the reference sign 16.

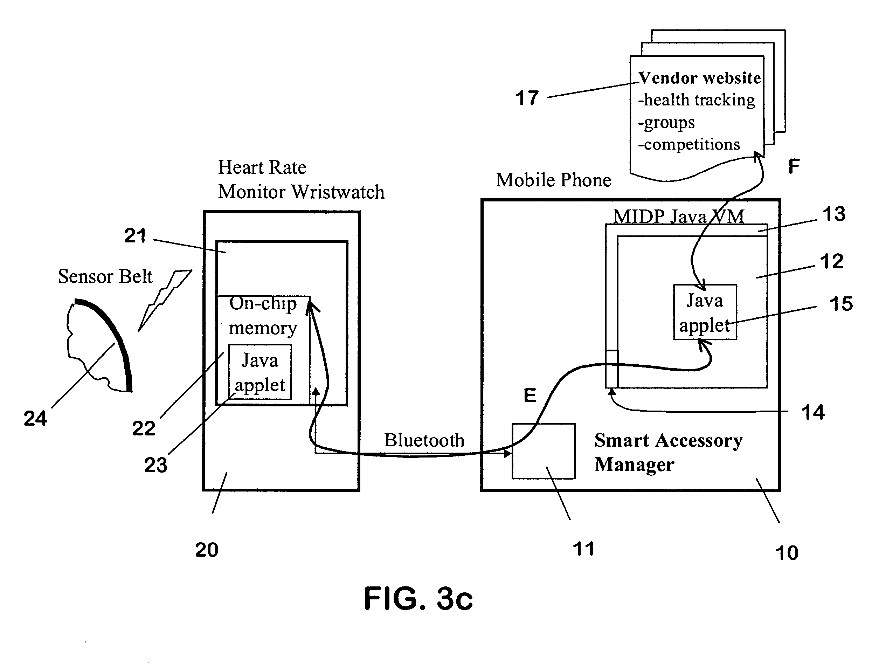

In addition, the applet 15 offers via the Java API 13 an access to the website 17 of the vendor of the heart rate monitor. The website 17 is equally displayed on the display of the mobile phone 10, as indicated in figure 3c. On the website 17, the user may select for example further information on health tracking, on available groups or on available competitions etc. via the normal user interface of the mobile phone 10.

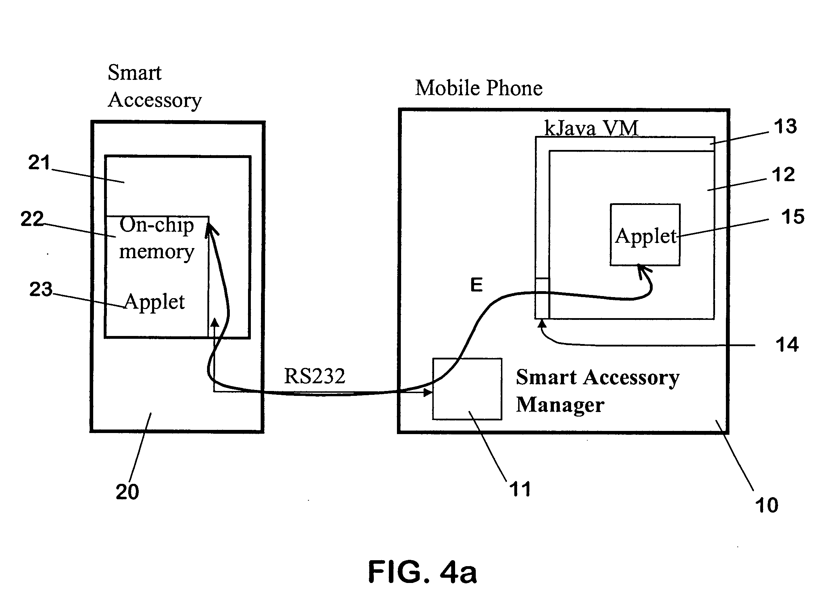

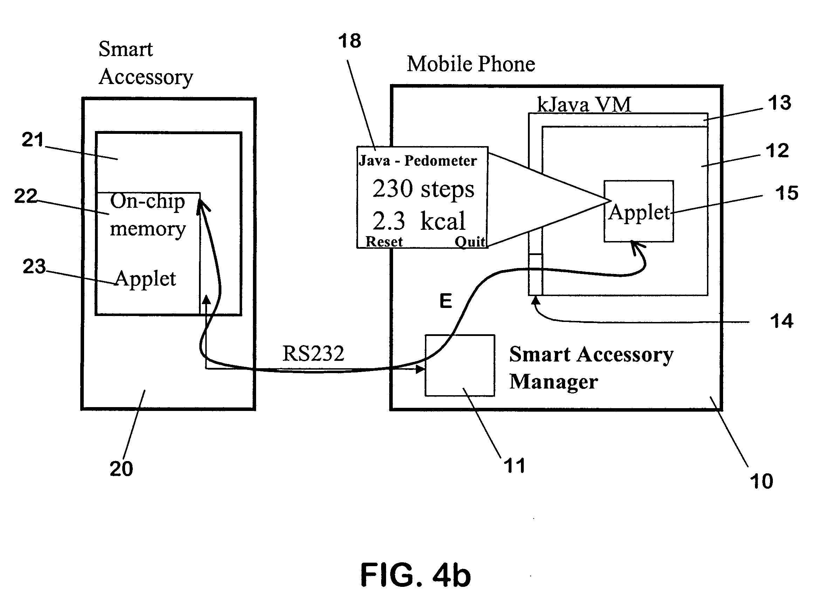

Figures 4a and 4b illustrate a further specific example for the co-operation between a smart accessory device 20 and a mobile phone 10. In this example, the smart accessory device 20 is connected to the mobile phone 10 via the RS232 bottom connector of the mobile phone 10. The accessory device 20 and the mobile phone 10 correspond basically again to those described with reference to figures 1a-1g, and corresponding components were provided with the same reference signs.

In the example of figures 4a and 4b, the smart accessory device 20 is a step counter and fat burn rate calculator. The accessory device 20 comprises again a microcontroller 21 with an on-chip memory 22, in which a kJava applet 23 is stored. Due to the function of the smart accessory device 20, the microcontroller 21 is combined in this case with an accelerometer.

The mobile phone 10 comprises instead of a MIDP Java VM a kJava VM 12.

In the situation depicted in figure 4a, the Java applet 23 was downloaded from the on-chip memory to the kJava VM 12 of the mobile phone 10, and a transparent byte-stream connection E between the downloaded applet 15 and the microcontroller 21 of the accessory device 20 is established. The situation thus corresponds again to the situation in figure 1g.

In figure 4b, a resulting effect of the data exchange is indicated. The microcontroller 21 of the smart accessory device 20 determines from measurements of the accelerometer the steps made by a person carrying the accessory device and calculates the burned fat rate. These values are then forwarded via the established transparent byte-stream connection E to the downloaded Java applet 15 in the mobile phone 10. The Java applet 15 takes care that the current step count and the burned fat rate is indicates via the Java API 13 on the display of the mobile phone 10. The applet 15 further offers via the Java API 13 and the display of the mobile phone 10 a possibility to reset the step counter and fat burn rate calculator or to quit the running program. The displayed information and options are indicated in figure 4b with reference sign 18.

It is to be noted that the described embodiments of the invention constitute only examples that can be varied in many ways.

## Claims

1. Method for supporting in a mobile terminal (10,30) a communication with an accessory device (20,40) connected to said mobile terminal (10,30), said method comprising downloading application software (23,43) for said accessory device (20,40) to said mobile terminal (10,30) and running downloaded application software (15,35) for said accessory device (20,40) in said mobile terminal (10,30), wherein a data exchange required for the communication with said accessory device (20,40) is enabled as transparent bi-directional bit-stream between said downloaded application software (15,35) and said accessory device (20,40).

2. Method according to claim 1, wherein a connection of an accessory device (20,40) to said mobile terminal (10,30) is detected automatically by said mobile terminal (10,30).

3. Method according to claim 2, wherein said download of application software (23,43) for a connected accessory device (20,40) is performed automatically by said mobile terminal (10,30) when a connection of an accessory device (20,40) to said mobile terminal (10,30) is detected.

4. Method according to one of the preceding claims, wherein said downloaded application software (15,35) opens a pipe to an accessory application programming interface (14,34) of said mobile terminal (10,30) for enabling said transparent bi-directional bit streams via said accessory application programming interface (14,34).

5. Method according to one of the preceding claims, wherein application software (23,43) for one or more applications supported by said accessory device (20,40) is downloaded to said mobile terminal (10,30).

6. Method according to one of the preceding claims, wherein said application software (23,43) is downloaded to said mobile terminal (10,30) from said accessory device (20,40).

7. Method according to one of claims 1 to 5, wherein said accessory device provides said mobile terminal with a link to a website, and wherein application software for said accessory device is downloaded to said mobile terminal from said website.

8. Method according to one of the preceding claims, wherein said mobile terminal (10) comprises a Java virtual machine (12) and wherein said application software (23,15) is realized as Java applet downloaded to said Java virtual machine (12).

9. Method according to one of claims 1 to 7, wherein said mobile terminal (30) comprises a Symbian operating system (32) and wherein said application software (43,35) is realized as Symbian application downloaded to said Symbian operating system (42).

10. Method according to one of the preceding claims, wherein a downloaded software is kept stored in said mobile terminal (10,30) after disconnection of said accessory device (20,40), and wherein in case of a later connection of the same kind of accessory device (20,40) to said mobile terminal (10,30), a download of application software is only performed in case it is determined that the version of the application software provided for said newly connected accessory device (20,40) is newer than the version of the application software stored for this kind of accessory device (20,40) in said mobile terminal (10,30).

11. Method according to one of the preceding claims, wherein said communication enables a user of said mobile terminal (10,20) to operate said accessory device (20,40) via said mobile terminal (10,20).

12. Method according to one of the preceding claims, wherein said mobile terminal comprises a user interface including a display and a user selection device, wherein said accessory device is a cover that can be linked to said user interface, and wherein said application software is an interface software for said user interface enabling a communication between said user interface and said cover.

13. Method according to one of claims 1 to 11, wherein said accessory part is a second mobile terminal and wherein said application software downloaded to said first mobile terminal communicates with a corresponding application software in said second mobile terminal for enabling a communication between said first and said second mobile terminal.

14. Method according to one of the preceding claims, wherein said downloaded application software enables a user of said accessory part to operate said mobile terminal.

15. Mobile terminal (10,30) comprising means (11-14;31-34) for realizing the steps of the method according to one of the preceding claims for supporting the communication with an accessory device (20,40) connected to said mobile terminal (10,30).

16. Mobile terminal (10,30) according to claim 15 comprising:
- an accessory application programming interface (14,34) for enabling a transparent bi-directional bit stream between a downloaded application software (15,35) running in said mobile terminal (10,30) and an accessory device (20,40) connected to said mobile terminal (10,30);
- an accessory protocol defining a transparent bi-directional bit-stream for an exchange of application data between a downloaded application software (15,35) and a connected accessory device (20,40); and
- an accessory manager (11,31) for managing a transparent bi-directional bit-stream for an exchange of application data between a downloaded application software (15,35) running in said mobile terminal (10,30) and an accessory device (20,40) connected to said mobile terminal (10,30) via said accessory application programming interface (14,34) and according to said protocol.

17. Mobile terminal (10,30) according to claim 16, wherein said accessory protocol is able to operate over all physical connecting media allowed by said mobile terminal (10,30) for a connection of accessory devices (20,40), and wherein said accessory manager (11,31) is able to manage a communication in accordance with said accessory protocol over all physical connecting media allowed by said mobile terminal (10,30) for a connection of accessory devices (20,40).

18. Mobile terminal (10,30) according to claim 16 or 17, wherein said accessory protocol further defines how to identify whether a connected accessory device (20,40) complies with said protocol, and wherein said accessory manager (11,31) detects in accordance with said accessory protocol a connection of an accessory device (20,40) complying with said accessory protocol to said mobile station (10,30).

19. Mobile terminal (10,30) according to one of claims 16 to 18, wherein said accessory protocol further defines a query for a downloadable data from a connected accessory device (20,40), and wherein said manager queries in accordance with said accessory protocol automatically for downloadable data from a connected accessory device.

20. Mobile terminal (10,30) according to one of claims 16 to 19, wherein said accessory protocol further defines a download of data from a connected accessory device (20,40) to said mobile terminal (10,30), which data comprises application software (23,43) for said accessory device (20,40), a software for downloading application software for said accessory device (20,40) or an indication of a source from which application software for said accessory can be downloaded, and wherein said accessory manager (11,31) manages in accordance with said accessory protocol downloading data from a connected accessory device (20,40) to said mobile terminal (10,30), which data comprises application software (23,43) for said accessory device (20,40), a software for downloading application software for said accessory device from another source than said accessory device (20,40), or an indication of a source from which application software for said accessory can be downloaded.

21. Mobile terminal (10,30) according to claim 20, wherein said accessory application programming interface (13,43) determines before a downloading of application software for a connected accessory device (20,40) whether the application software (15,35) required for the communication with said accessory device (20,40) is already available in said mobile terminal (10,30) and/or whether a version of an application software which is preferred to a version available in said mobile terminal can be downloaded to said mobile terminal, and wherein said accessory manager (11,31) downloads application software for said accessory device (20,40) only in case the application software (15,35) required for the communication with said accessory device (20,40) is not yet available in said mobile terminal (10,30) and/or in case a version of the application software which is preferred to a version available in said mobile terminal can be downloaded to said mobile terminal.

22. Mobile terminal (10,30) according to one of claims 16 to 20, wherein said accessory manager downloads an application software for an accessory device which is connected to said mobile terminal only for the time during which the application is executed.

23. Mobile terminal (10,30) according to one of claims 16 to 22, wherein said accessory manager (11,31) detects a removal of an accessory device (20,40) complying with said protocol from said mobile terminal (10,30).

24. Mobile terminal (10,30) according to one of claims 16 to 23, further comprising means for establishing a connection to a website identified by data downloaded via said accessory manager from said connected accessory device, and for enabling a download of application software for said connected accessory device from said website.

25. Mobile terminal (10,30) according to one of claims 15 to 24, comprising a Java virtual machine (12) or a Symbian operating system (32) for running a downloaded application software (15,35).

26. Communication system comprising a mobile terminal (10,30) according to one of claims 15 to 25 and an accessory device (20,40) which can be connected to said mobile terminal (10,30) and which supports a communication with application software downloaded (15,35) to said mobile terminal (10,30).

27. Communication system according to claim 26, wherein said mobile terminal comprises a user interface including a display and a user selection device, and wherein said accessory device is a cover which can be linked to said mobile terminal and which includes an interface software for said user interface as downloadable application software for a communication between said user interface of said mobile terminal and said cover.

28. Communication system according to claim 27, wherein said interface software comprises a program part for displaying selectable functions on said user interface.

29. Communication system according to claim 27 or 28, wherein said interface software comprises a program part for processing signals generated by a selection of functions by a user of said mobile terminal via said user interface.

30. Communication system according to one of claims 26 to 29, wherein said mobile terminal comprises a memory which is provided exclusively for storing downloaded application software enabling a communication with connected accessory devices.

31. Communication system according to claim 27, wherein said accessory part is a second mobile terminal.

32. Accessory manager according to one of claims 15-23.

33. Software for enabling a mobile terminal (10,30) to communicate with an accessory device (20,40) connected to said mobile terminal (10,30), said software comprising program code realizing the steps of the method according to one of claims 1 to 14 when said software is run in processing means of a mobile terminal (10,30) to which an accessory device (20,40) supporting these steps is connected.
